# DEMANDE DE BREVET EUROPEEN

(11) **EP 1 981 151 A1**
(43) Date de publication de la demande: **15.10.2008**
(21) Numéro de dépôt: 08154365.4
(22) Date de dépôt: 11.04.2008
(51) Int. Cl.: H02K 5/136, F16N 21/00, H02K 5/173, F16C 33/66

(54) **Machine tournante comportant une enveloppe antidéflagrante**

(30) Priorité: 12.04.2007 FR 0754432
(71) Demandeur: MOTEURS LEROY-SOMER, 16000 Angouleme (FR)
(72) Inventeur: Boisaubert, François, 90500, BEAUCOURT (FR); Corberand, Bernard, 25310, HERIMONCOURT (FR)
(74) Mandataire: Tanty, François

(57) **Abrégé**

La présente invention concerne une machine comportant un arbre (1) tournant relativement à une enveloppe antidéflagrante (3, 17, 39, 40) et au moins un roulement (2) disposé à l'intérieur de l'enveloppe.

## Description

La présente invention concerne les machines comportant un arbre tournant relativement à un stator et supporté par au moins un roulement.

L'invention s'applique plus particulièrement mais non exclusivement aux machines tournantes électriques dites antidéflagrantes, qu'elles soient motrices et/ou génératrices, notamment les machines électriques industrielles de puissance supérieure ou égale à 1kW.

Les machines antidéflagrantes sont destinées à fonctionner dans un environnement susceptible de contenir des mélanges explosifs et sont réalisées de telle sorte que l'inflammation interne du mélange explosif contenu à l'intérieur de l'enveloppe ne se transmette pas à l'atmosphère explosive présente à l'extérieur.

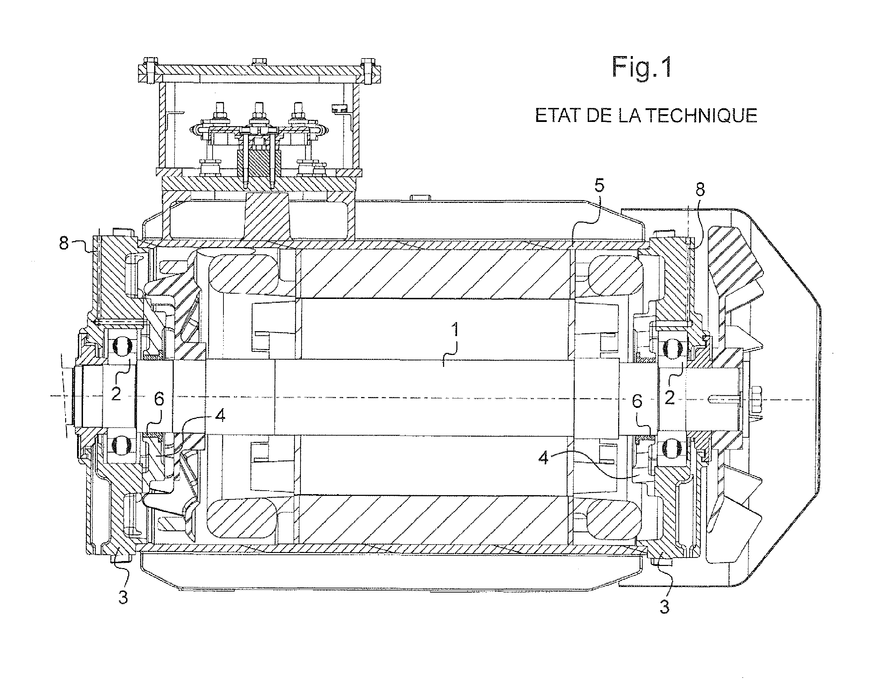

La figure 1 représente une machine électrique antidéflagrante connue, comportant un arbre 1 tournant sur des roulements 2, supportés par des flasques 3. Des couvre roulements 4 sont disposés du côté intérieur des flasques. Les flasques sont fixés sur un carter 5. L'ensemble constitue une enveloppe antidéflagrante empêchant la propagation d'une flamme de l'intérieur de la machine vers l'extérieur. Les couvre roulements intérieurs portent chacun une bague 6 définissant avec l'arbre 1 un jeu radial suffisamment faible pour empêcher la propagation d'une flamme. La lubrification des roulements s'effectue au travers de canaux 8 situés à l'extérieur de l'enveloppe antidéflagrante. Le graissage de la machine s'effectue en injectant dans les canaux 8 une graisse pour roulements. La section des canaux 8 est typiquement supérieure ou égale à 6 mm, et n'empêche pas la propagation d'une flamme.

Il existe le risque avec une telle machine connue qu'en cas de grippage d'un roulement la température de celui-ci s'élève et dépasse la température acceptable, compte tenu de l'atmosphère dans laquelle fonctionne la machine. Le brevet US 6 264 204 divulgue un dispositif d'étanchéité pour moteur antidéflagrant qui prévoit également que les roulements soient placés à l'extérieur de la machine.

La demande GB 2 199 905 décrit une machine électrique comportant un roulement disposé à l'intérieur d'une enveloppe antidéflagrante et un dispositif de lubrification.

L'invention vise à perfectionner encore les machines électriques tournantes comportant une enveloppe antidéflagrante.

L'invention a pour objet, selon l'un de ses aspects, une machine comportant un arbre tournant relativement à une enveloppe antidéflagrante et au moins un roulement, machine dans laquelle le ou les roulements sont disposés à l'intérieur de l'enveloppe.

Grâce à l'invention, en cas de grippage du roulement et d'élévation de la température de celui-ci, l'enveloppe antidéflagrante empêche la propagation d'une flamme qui serait initiée par ce grippage ou cette élévation de température.

L'invention diminue ainsi davantage le risque d'explosion. La machine peut notamment comporter deux roulements disposés chacun à l'intérieur de l'enveloppe.

L'enveloppe antidéflagrante peut comporter une pièce de support d'un roulement, notamment un flasque, comportant une portion antidéflagrante ménageant un passage pour l'arbre avec un jeu radial suffisamment faible pour empêcher la propagation d'une flamme depuis l'intérieur de l'enveloppe vers l'extérieur. Ce jeu est par exemple inférieur ou égal à 0,1 mm. La portion antidéflagrante peut par exemple s'étendre axialement sur plus de 10 mm, notamment plus de 20 mm, le jeu radial pouvant être inférieur ou égal à 0,1 mm sur toute cette longueur. Cette portion antidéflagrante peut être définie par un élément rapporté sur une pièce supportant le roulement. En variante, la portion antidéflagrante peut être monolithique avec la pièce supportant le roulement.

La machine peut comporter au moins un canal de graissage d'un roulement, ce canal présentant une portion antidéflagrante de section suffisamment grande pour permettre la circulation de la graisse à travers le canal lors du graissage mais suffisamment faible pour empêcher la propagation d'une flamme depuis une extrémité intérieure du canal vers son extrémité extérieure. Le canal de graissage débouche dans l'enceinte délimitée par l'enveloppe antidéflagrante et peut comporter au moins une partie s'étendant à l'intérieur d'une pièce supportant les roulements, par exemple un flasque d'extrémité de la machine.

La portion antidéflagrante du canal de graissage peut s'étendre à l'intérieur de cette pièce ou à l'extérieur de celle-ci, pouvant dans un exemple de mise en oeuvre de l'invention être située dans un graisseur rapporté sur la pièce supportant le roulement, par exemple vissé sur celle-ci.

Le graisseur peut comporter un corps tubulaire et peut loger un insert, ce dernier définissant à l'intérieur du corps une section qui est suffisamment grande pour le passage de la graisse mais suffisamment faible pour éviter la propagation d'une flamme. Cette section est par exemple définie par un jeu radial inférieur ou égal à 0,1 mm sur une longueur supérieure ou égale à 20 mm.

Le graisseur peut être muni d'un connecteur de raccordement à une source de graisse, ce connecteur se présentant par exemple sous la forme d'une tétine.

Le canal de graissage peut comporter deux alésages, lesquels peuvent être réalisés dans la pièce supportant le roulement. Ces alésages peuvent être traversants et orientés perpendiculairement.

Dans un exemple de mise en oeuvre de l'invention la portion antidéflagrante du canal de graissage est définie par un insert, par exemple une goupille cylindrique, engagé dans l'un des alésages, notamment celui définissant l'extrémité intérieure du canal. Le cas échéant, un ressort peut être prévu dans le canal de graissage pour immobiliser l'insert. L'un des alésages du canal de graissage peut être fermé à une extrémité par un bouchon qui est par exemple vissé dans un taraudage du canal de graissage.

L'invention a encore pour objet, indépendamment ou en combinaison avec ce qui précède, un graisseur antidéflagrant, à relier à une source de graisse, comportant un corps creux, un connecteur de raccordement à la source de graisse et une partie de fixation sur la machine à graisser, le corps du graisseur logeant un insert définissant avec une surface intérieure du corps un canal de circulation de la graisse, ce canal ayant une section suffisamment grande pour permettre la circulation de la graisse pour le graissage mais suffisamment faible pour empêcher la propagation d'une flamme. Le canal peut par exemple être défini par un jeu radial inférieur ou égal à 0,1 mm, sur une longueur supérieure ou égale à 20 mm.

L'invention a encore pour objet un procédé de production de force motrice ou d'électricité, dans lequel une machine telle que définie ci-dessus fonctionne dans une atmosphère explosive.

L'invention pourra être mieux comprise à la lecture de la description détaillée qui va suivre, d'exemples de mise en oeuvre non limitatifs de celle-ci, et à l'examen du dessin annexé, sur lequel :
- la figure 1, précédemment décrite, est une coupe longitudinale schématique d'une machine antidéflagrante conforme à l'état de la technique,
- la figure 2 est une vue analogue à la figure 1 d'une machine réalisée conformément à un exemple de mise en oeuvre de l'invention,
- la figure 2A représente le détail II de la figure 1,
- la figure 3 représente à échelle agrandie une partie d'extrémité de la machine de la figure 2,
- la figure 4 représente isolément un graisseur réalisé conformément à l'invention, et
- la figure 5 illustre une variante de réalisation de la machine.

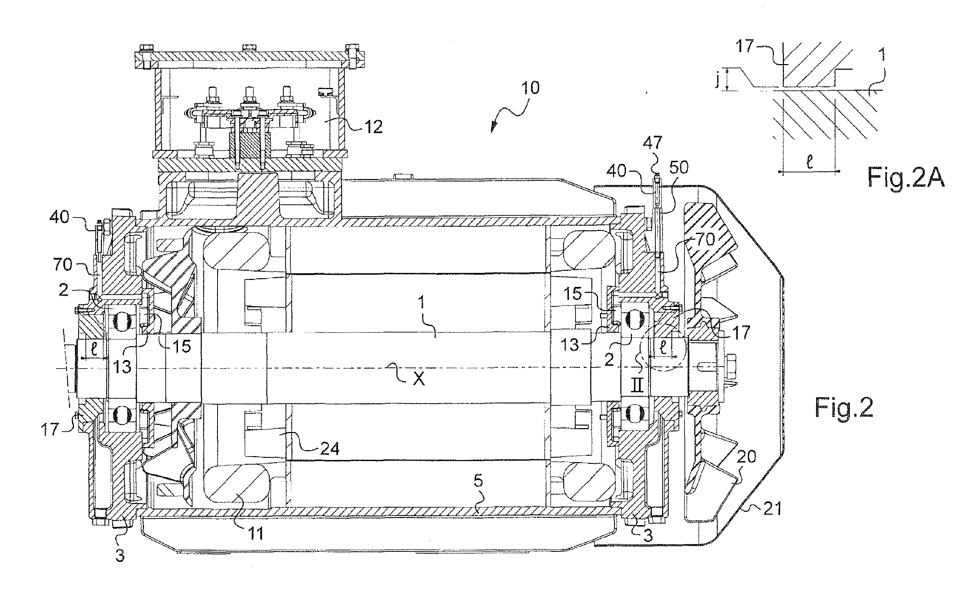

La machine électrique 10 représentée à la figure 2 comporte un arbre tournant 1 d'axe longitudinal X qui est supporté par des roulements 2 à ses extrémités, ces roulements 2 étant portés par des flasques correspondants 3 fixés à un carter 5. Ce dernier loge un stator électrique 11 qui peut être de tout type, par exemple à bobinage concentré ou distribué, et supporte un boîtier de raccordement électrique 12 permettant d'effectuer les branchements nécessaires au fonctionnement de la machine.

Des couvres roulement 13 sont rapportés sur les flasques 3 du côté intérieur de la machine afin de définir au moins partiellement des chambres 15 de graissage des roulements 2.

Les flasques 3 comportent des portions antidéflagrantes 17 qui viennent recouvrir sur une distance *l* l'arbre 1 avec un jeu radial *j*, comme on peut le voir sur la figure 2A, le jeu *j* étant suffisamment faible et la longueur *l* suffisamment grande pour empêcher la propagation d'une flamme depuis l'intérieur de la machine vers l'extérieur.

Le jeu *j* est par exemple inférieur ou égal à 0,1 mm et la longueur *l* est par exemple supérieure ou égale à 20 mm. Bien entendu, les dimensions du jeu *j* et de la longueur *l* peuvent varier en fonction des normes auxquelles la machine doit satisfaire, en fonction par exemple de la nature des matériaux utilisés et/ou des conditions de fonctionnement, par exemple de la composition de l'atmosphère dans laquelle la machine va fonctionner. Dans l'exemple considéré, les portions antidéflagrantes 17 sont formées par des éléments rapportés du côté extérieur sur la partie des flasques 3 qui supporte les roulements mais dans une variante non illustrée les portions antidéflagrantes 17 sont réalisées d'une seule pièce avec le reste des flasques 3.

Les portions antidéflagrantes 17 définissent au moins partiellement, du côté opposé aux couvre roulements 13, la chambre de graissage correspondante 15.

L'arbre 1 peut entraîner à une extrémité un ventilateur 20 protégé par un capot 21.

L'arbre 1 porte, sur sa portion s'étendant en regard du stator 11, un rotor 24 qui peut être de tout type, à aimants permanents ou non, la machine étant par exemple un moteur asynchrone ou synchrone.

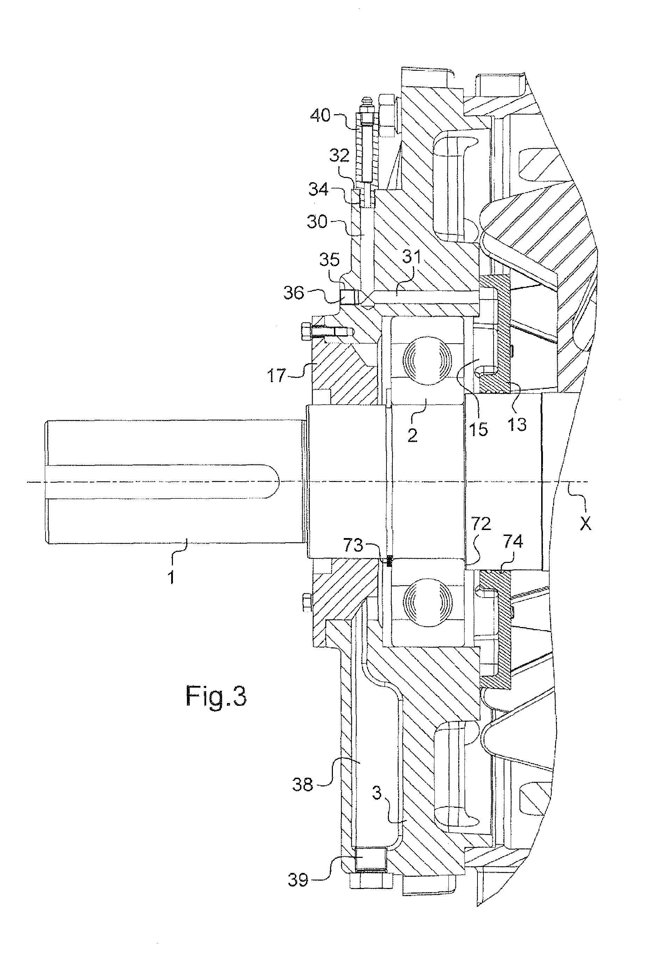

Chaque flasque 3 comporte un canal de graissage 70, qui, comme on peut le voir sur la figure 3, comporte deux portions 30 et 31 qui s'étendent par exemple perpendiculairement entre elles, la portion 30 étant par exemple orientée perpendiculairement à l'axe X et la portion 31 lui étant parallèle.

Dans l'exemple considéré, la portion 30 débouche radialement sur une surface extérieure 32 du flasque 3 et communique avec un graisseur 40 qui est par exemple vissé dans un taraudage 34 réalisé à l'extrémité extérieure de la portion 30.

La portion 31 se prolonge par exemple vers l'extérieur au-delà de son intersection avec la portion 30 par une portion taraudée 35, laquelle reçoit un bouchon 36 empêchant la propagation d'une flamme depuis l'intérieur de la machine vers l'extérieur à travers la portion 30, et débouche à son extrémité opposée au bouchon 36 dans la chambre de graissage 15 du roulement 2.

La chambre de graissage 15 communique avec une chambre annexe 38 de récupération de graisse, obturée par un bouchon 39 empêchant la propagation d'une flamme depuis l'intérieur de la machine vers l'extérieur.

On peut voir sur la figure 3 que les roulements 2 peuvent être retenus axialement sur l'arbre 1 entre un épaulement 72 de celui-ci et un ci clip 73.

Les couvre roulements 13 peuvent comporter sur leur surface radialement intérieure, faisant face à l'arbre 1, des gorges ou filets 74 destinés à repousser la graisse vers la chambre de graissage 15 lors de la rotation de l'arbre.

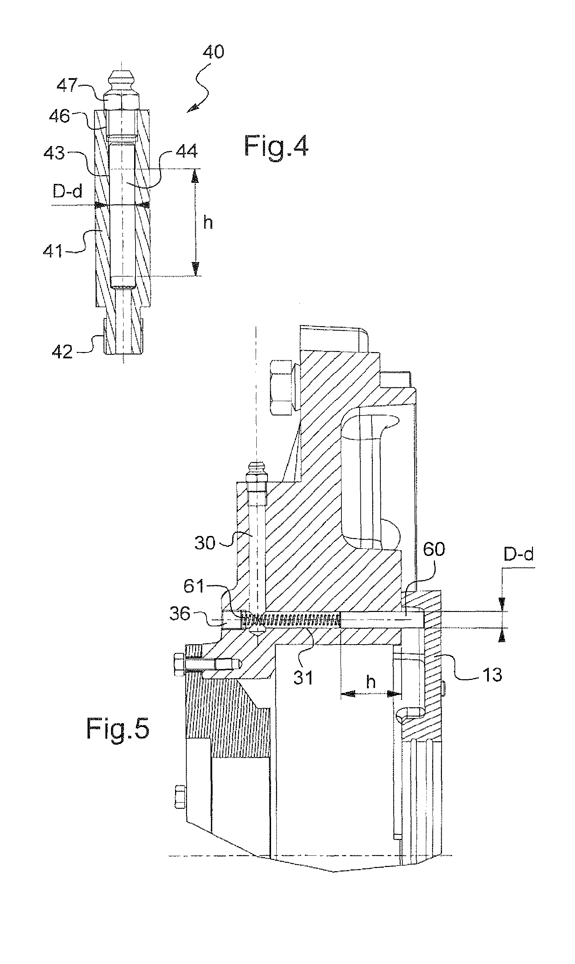

On a représenté le graisseur 40 isolément à la figure 4. Ce dernier comporte un corps tubulaire 41 pourvu à une extrémité d'une portion rétrécie filetée 42 permettant son vissage dans la portion taraudée 34 du flasque 3. Le corps 41 définit un logement 43 qui loge un insert 44, lequel se présente dans l'exemple considéré sous la forme d'une goupille cylindrique.

Le logement 43 communique avec une portion taraudée 46 qui reçoit un connecteur 47 qui permet le raccordement à une source de graisse. Ce connecteur 47 se présente sous la forme d'une tétine dans l'exemple illustré, mais pourrait être réalisé autrement.

La goupille 44 définit, dans l'exemple considéré, un jeu annulaire de dimensions (*Dd*)/ 2, où *D* est le diamètre intérieur du logement 43 et *d* le diamètre extérieur de la goupille, ce jeu s'étendant sur une longueur *h*. La longueur *h* est par exemple supérieure à 20 mm, étant par exemple de 27 mm environ et le jeu radial (*D-d*)/ *2* est par exemple inférieur à 0,1 mm, étant par exemple égal à 0,085 mm, D-d étant par exemple égal à 0,17 mm.

La valeur du jeu ainsi que la longueur sur laquelle ce jeu s'étend pourront être choisies en fonction des normes à laquelle la machine doit répondre, tout comme les valeurs *j* et *l* précédemment mentionnées pour le jeu entre le flasque et l'arbre. Le flasque droit 3 sur la figure 2 peut être équipé d'un graisseur 40 de manière similaire à ce qui est représenté sur la figure 3.

Dans l'exemple considéré, le graisseur 40 est raccordé au flasque droit par l'intermédiaire d'une rallonge 50 qui est fixée sur le flasque 3 de façon à ce que la tétine 47 du graisseur 40 puisse dépasser du capot 21.

Dans la variante illustrée à la figure 5, la portion antidéflagrante du canal de graissage 70 ne se situe pas dans un graisseur 40 rapporté sur le flasque mais est intérieure au flasque 3.

La portion 31 du canal de graissage reçoit par exemple un insert 60 qui vient par exemple en appui à une extrémité sur le couvre roulement 13, pouvant par exemple être maintenue en appui contre celui-ci par un ressort 61 qui s'appuie à une extrémité sur l'insert 60 et à l'autre extrémité sur le bouchon 36. La présence du ressort 61 n'est pas obligatoire pour empêcher la propagation d'une flamme depuis l'intérieur de la machine vers l'extérieur à travers les portions 30 et 31.

L'insert 60 se présente par exemple sous la forme d'une goupille cylindrique qui définit, à l'intérieur de la portion 31 du canal de graissage, une portion antidéflagrante s'étendant sur une distance *h* avec un jeu radial (*D-d*)/2, la distance *h* et le jeu radial ayant par exemple les mêmes valeurs que dans l'exemple de la figure 4.

Pour graisser les roulements, on raccorde la tétine 47 à une source de graisse et on injecte la graisse sous pression, par exemple sous une pression de 1.5 bars.

La portion antidéflagrante du canal de graissage présente une section suffisante pour permettre à la graisse de circuler à travers le canal de graissage, d'atteindre la chambre de graissage 15 et ensuite éventuellement la chambre annexe de récupération 38.

Bien entendu, l'invention n'est pas limitée aux exemples qui viennent d'être décrits.

On peut par exemple réaliser autrement encore la portion antidéflagrante du canal de graissage, par exemple au moyen d'une goupille insérée dans la portion 30 du canal de graissage. L'insert disposé dans le graisseur ou dans une portion du canal de graissage ménagée dans l'enveloppe antidéflagrante de la machine peut se présenter sous une forme autre qu'une goupille cylindrique, par exemple une tige filetée ou de section non circulaire ou un bloc d'un matériau alvéolaire.

Le canal de graissage peut avoir une forme autre que la forme illustrée, et peut par exemple s'étendre entièrement rectilignement.

L'expression « comportant un » doit être comprise comme étant synonyme de « comportant au moins un », sauf si le contraire est spécifié.

## Revendications

1. Machine (10) comportant un arbre (1) tournant relativement à une enveloppe antidéflagrante (3, 5, 12, 17, 39, 40, 60) et au moins un roulement (2) disposé à l'intérieur de l'enveloppe, la machine comportant au moins un canal (70) de graissage d'un roulement (2), ce canal présentant une portion antidéflagrante de section suffisamment grande pour permettre la circulation de la graisse à travers le canal lors du graissage mais suffisamment faible pour empêcher la propagation d'une flamme depuis une extrémité intérieure du canal vers son extrémité extérieure, la portion antidéflagrante étant située dans un graisseur (40) rapporté sur un flasque (3) supportant le roulement (2), le graisseur (40) étant pourvu à une extrémité d'une portion rétrécie filetée (42) permettant son vissage dans une portion taraudée (34) du flasque (3).

2. Machine (10) comportant un arbre (1) tournant relativement à une enveloppe antidéflagrante (3, 5, 12, 17, 39, 40, 60) et au moins un roulement (2) disposé à l'intérieur de l'enveloppe, la machine comportant au moins un canal (70) de graissage d'un roulement (2), ce canal présentant une portion antidéflagrante de section suffisamment grande pour permettre la circulation de la graisse à travers le canal lors du graissage mais suffisamment faible pour empêcher la propagation d'une flamme depuis une extrémité intérieure du canal vers son extrémité extérieure, le canal de graissage comportant deux alésages (30, 31), réalisés dans une pièce (3) supportant le roulement (2), la portion antidéflagrante étant définie par un insert (60) engagé dans l'un des alésages, notamment celui (31) définissant l'extrémité intérieure du canal, un ressort (61) étant disposé dans le canal pour immobilier l'insert.

3. Machine selon la revendication 1 ou 2, comportant deux roulements (2) disposés à l'intérieur de l'enveloppe.

4. Machine selon l'une des revendications précédentes, l'enveloppe antidéflagrante comportant un flasque (3) comportant une portion antidéflagrante (17) ménageant un passage pour l'arbre avec un jeu radial *(j)* suffisamment faible pour empêcher la propagation d'une flamme depuis l'intérieur de l'enveloppe vers l'extérieur.

5. Machine selon la revendication 4, la portion antidéflagrante s'étendant axialement sur une distance *(l)* supérieure à 10 mm, notamment à 20 mm, le jeu radial *(j)* étant inférieur ou égal à 0,1 mm sur cette distance *(l).*

6. Machine selon l'une quelconque des revendications 1 à 5, la portion antidéflagrante (17) étant définie par un élément rapporté sur une pièce (3) supportant le roulement.

7. Machine selon l'une quelconque des revendications 1 à 6, la portion antidéflagrante (17) étant monolithique avec la pièce (3) supportant le roulement.

8. Machine selon l'une quelconque des revendications précédentes, le canal comportant au moins une partie (30, 31) s'étendant intérieurement à une pièce supportant un roulement (2), notamment un flasque d'extrémité (3) de la machine.

9. Machine selon la revendication 2, la portion antidéflagrante du canal de graissage s'étendant à l'intérieur de la pièce (3) supportant le roulement (2).

10. Machine selon la revendication 1, la portion antidéflagrante du canal de graissage s'étendant à l'extérieur de la pièce (3) supportant le roulement (2).

11. Machine selon l'une quelconque des revendications précédentes, hormis la revendication 2, le graisseur comportant un corps tubulaire (41) et logeant un insert (44), ce dernier définissant à l'intérieur du corps une section qui est suffisamment grande pour le passage de la graisse mais suffisamment faible pour éviter la propagation d'une flamme.

12. Machine selon l'une quelconque des revendications précédentes, hormis la revendication 2, le graisseur étant muni d'un connecteur (47) de raccordement à une source de graisse.

13. Machine selon la revendication 1, le canal de graissage comportant deux alésages (30, 31), réalisés dans une pièce (3) supportant le roulement (2).

14. Machine selon la revendication 13, les alésages (30, 31) étant traversants et orientés perpendiculairement.

15. Machine selon la revendication 2, l'insert (60) étant une goupille cylindrique.
